# EUROPEAN PATENT SPECIFICATION

(11) **EP 1 932 723 B1**
(45) Date of publication and mention of the grant of the patent: **06.01.2010**
(21) Application number: 07106740.9
(22) Date of filing: 23.04.2007
(51) Int. Cl.: B60R 5/04

(54) **Combination type cargo screen movable in a front and a rear direction**
Vorwärts und rückwärts bewegliche Kombinationsgepäckabdeckung
Cache bagages de type combiné pouvant être déplacé de l'avant à l'arrière

(30) Priority: 15.12.2006 KR 20060128896
(43) Date of publication of application: 18.06.2008
(73) Proprietor: HYUNDAI MOTOR COMPANY, Seoul 137-938 (KR); BOS GmbH & Co. KG, 73760 Ostfildern (DE)
(72) Inventor: Cho, Hoo Taek, Giheung-gu, Yongin-si, Gyeonggi-do (KR); Jung, Dae Ik, Suwon-si Gyeonggi-do (KR)
(74) Representative: Viering, Jentschura & Partner

(56) References cited:
- DE-A1- 10 330 627
- DE-A1- 10 357 153
- DE-A1- 19 910 656

## Description

### BACKGROUND OF THE INVENTION

### (a) Field of the Invention

The present invention relates to a combination type cargo screen movable front and rear, and more particularly to a combination type cargo screen in which a main body supporting a cover screen can move in a forward and a rearward direction of a vehicle so as to enhance convenience of use and to which a barrier net for satisfying regulations of luggage invasion prevention can be adopted.

### (b) Description of the Related Art

A recreational vehicle is generally provided with a luggage room between a rear seat and a rear door, and in order to prevent luggage contained in the luggage room from being exposed or to fix the luggage, a cargo screen is provided.

Generally, the cargo screen is comprised of a cover screen coveting luggage and a main body to which the cover screen is rolled. In case that the cargo screen needs to be used, the cover screen is exploded to be used in a state that the main body supporting the cover screen is fixed to the luggage room.

Meanwhile, in order to enhance of the safety of a passenger, a combination type cargo screen which adopts a barrier bet to the cargo screen so as to separate the luggage room and the passenger room is also used.

However, in European countries, the combination type cargo screen should pass luggage invasion prevention test. For this test, it is preferable that the main body is fixed to the luggage room.

Accordingly, since the distance between the cargo screen and the rear end of the vehicle becomes great, there is a problem in that it is necessary for a user to enter the luggage room in order to use the cargo screen or to put his hand on a floor of the luggage room to pull out the cover screen. A cargo screen according to the preamble of claim 1 is known from DE-A-10357153.

### SUMMARY OF THE INVENTION

The present invention has been made in an effort to provide a combination type cargo screen movable front and rear in which a main body supporting a cover screen is movable in a forward and a rearward direction of a vehicle so as to enhance convenience of use and to which a barrier net for satisfying regulations on luggage invasion prevention can be adopted.

According to the present invention, a combination type cargo screen as defined in claim 1 is provided.

The operation lever part may include: a lever body with a shape of a long rod; a lever which is protruded at one end of the lever body so as to be able to be pushed or pulled by a user; and a roller which is rotatably connected to the other end of the lever body and moved along the fixing rail part.

The roller may further include a plurality of gear teeth which are engaged with the gear teeth of the fixing rail part and the moving rail part.

The gear teeth of the moving rail part may be formed toward an upper surface of the lever body, and the moving rail part may further include a body receiving part which houses an end of the main body at an end thereof which is adjacent to the roller.

The main body may further include a guide pin which is protruded at both ends thereof, and the guide part further include an insertion part which is formed at an initial mount position where the cover screen is not drawn out so as to house the guide pin.

The main body may further include a hook which is installed to lower surfaces of both ends and a hook lever which protrudes and returns the hook, and the guide part may further include a hooking part which is formed to be adjacent to the insertion part and to which the hook lever is maintained to be hooked.

A steel bracket supporting an upper side and a lower side of the guide pin at an insertion state of the guide pin may be provided at an inside of the insertion part.

A moving distance of the main body may be set at twice of a moving distance of the lever.

### BRIEF DESCRIPTION OF THE DRAWINGS

FIG. 1 is a partial perspective view showing a vehicle to which a cargo screen according to an exemplary embodiment of the present invention is mounted.
FIG. 2 is a perspective view showing a mounting position according to a cargo screen according to an exemplary embodiment of the present invention.
FIG. 3 is a partial perspective view of a cargo screen and a screen moving device according to an exemplary embodiment of the present invention.
FIG. 4 is a side view showing an operation state of a screen moving device according to an exemplary embodiment of the present invention.
FIG. 5 is a horizontal cross sectional view showing an end part of a body and a guide part according to a cargo screen according to an exemplary embodiment of the present invention.

### <Description of Reference Numerals Indicating Primary Elements in the Drawings>

| | |
|---|---|
| 1: vehicle | 10: luggage room |
| 100: cargo screen | 120: barrier net |
| 130: cover screen | 200: screen moving device |
| 210: guide part | 220: fixing rail part |
| 230: operation lever part | 240: moving rail part |

### DETAILED DESCRIPTION OF THE EMBODIMENTS

An exemplary embodiment of the present invention will hereinafter be described in detail with reference to the accompanying drawings.

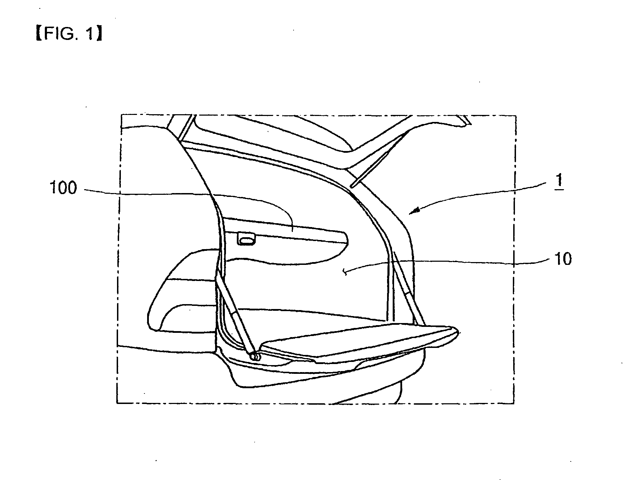

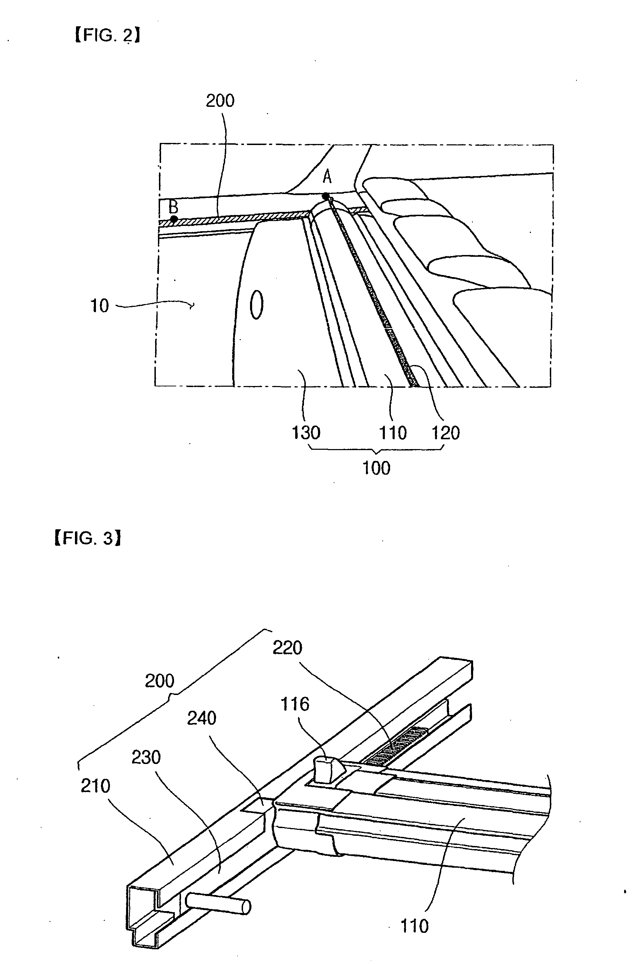

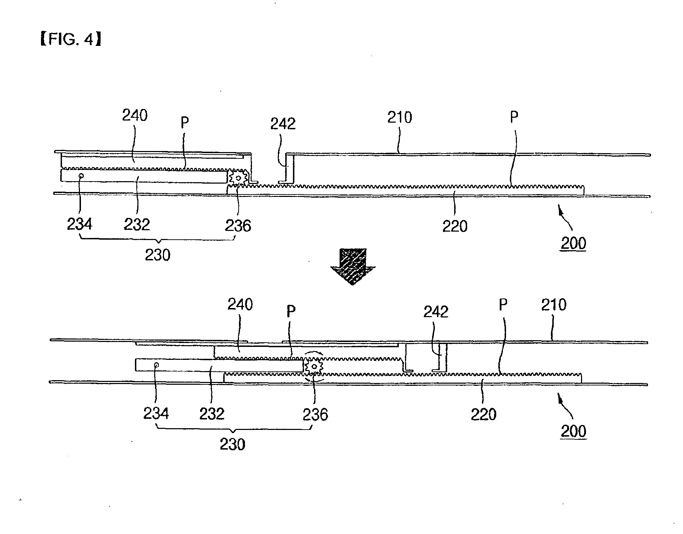

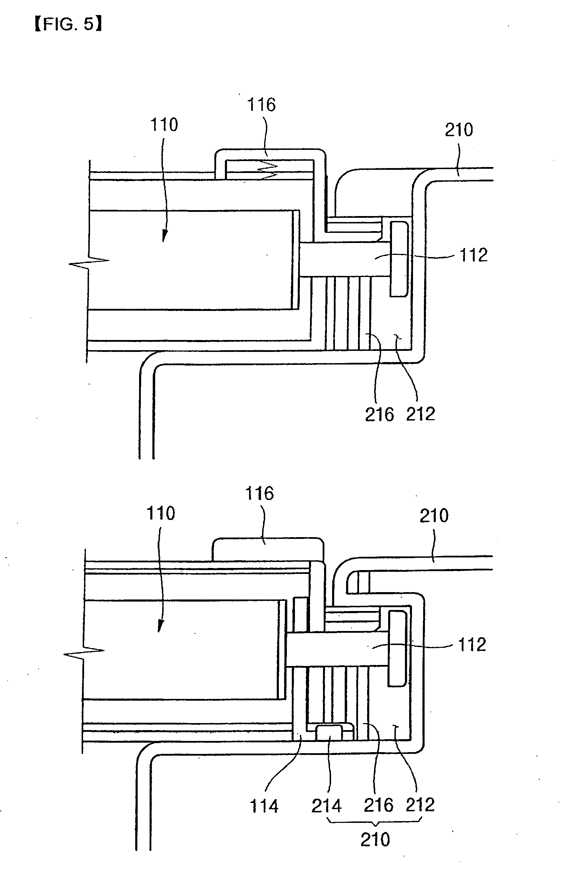

FIG. 1 is a partial perspective view showing a vehicle to which a cargo screen according to an exemplary embodiment of the present invention is mounted, FIG. 2 is a perspective view showing a mounting position according to a cargo screen according to an exemplary embodiment of the present invention, FIG. 3 is a partial perspective view of a cargo screen and a screen moving device according to an exemplary embodiment of the present invention, FIG. 4 is a side view showing an operation state of a screen moving device according to an exemplary embodiment of the present invention, and FIG. 5 is a horizontal cross sectional view showing an end part of a body and a guide part according to a cargo screen according to an exemplary embodiment of the present invention.

As shown in FIG. 1, a combination type cargo screen 100 according to an exemplary embodiment of the present invention is mounted to a luggage room 10 of a vehicle 1 to cover things contained in the luggage room 10.

The combination type cargo screen 100 according to an exemplary embodiment of the present invention is a type to which a barrier net 120 which isolates a passenger room from the luggage room 10 to enhance the safety of a passenger can be connected. A cargo screen 100 can move in a front and a rear direction of the vehicle 1 by a screen moving device 200 so as to enhance convenience of a passenger.

As shown in FIG. 1 to FIG. 5, the combination type cargo screen 100 according to an exemplary embodiment of the present invention includes a main body 110 which is disposed in a width direction of the luggage room 10, the barrier net 120 which is separably mounted at an upper part of the main body 110, and a cover screen 130 which is winded around the main body 110 and can be drawn to cover luggage.

As shown in FIG. 3 and FIG. 5, both ends of the main body 110 are separably housed in a moving rail part 240. A guide pin 112 and a hook 114 are provided at both ends of the main body 110, and a hook lever 116 for operating the hook 114 is provided.

The hooks 114 are respectively provided at lower sides of both ends of the main body 110, and are downwardly protruded below the main body 110 by the hook lever 116 or return to their original position.

When the cargo screen 100 is not used in a state in that the main body 110 is inserted into the moving rail part 240, the cargo screen 100 should be fixed to an initial mount position A. The reason of this is to firmly fix the barrier net 120 thereby satisfying the regulation regarding prevention of luggage invasion.

For this, the guide pin 112 is inserted into a guide part 210, so the main body 110 of the cargo screen 100 is firstly fixed to the initial mount position A. Then, the hook lever 116 is operated so that the hook 114 is hooked by a hooking part 214, thereby secondly fixing the main body 110. Further detailed explanation for the same will be made later.

As shown in FIG. 2, the main body 110 of the cargo screen 100 can freely move between positions where the cover screen 130 is not used, that is, between the initial mount position A and an operation position B by the screen moving device 200, and can be fixed.

As shown in FIG. 3 to FIG. 5, the screen moving device 200 includes the guide parts 210 which are mounted to both sides of the luggage room 10, a fixing rail part 220 which is fixed to the guide part 210, an operation lever part 230 which is movably mounted to an upper surface of the fixing rail part 220, and the moving rail part 240 which is coupled to an upper part of the operation lever part 230.

As shown in FIG. 3 and FIG. 4, the guide part 210 is bent in a shape of '⊏', and then is again inwardly bent so as to have a structure housing the fixing rail part 220, the operation lever part 230, and the moving rail part 240.

As shown in FIG. 4 and FIG. 5, the fixing rail part 220 having a plurality of gear teeth P is disposed on a bottom surface of the guide part 210. An insertion part 212 and a steel bracket 216 housing the guide pin 112 which is formed to the main body 110 is formed at an end of the guide part 210. The hooking part 214 to which the hook 114 which is formed to the main body 110 in the vicinity of the insertion part 212 is maintained to be hooked thereto is formed in an inside of the guide part 210.

The insertion part 212 has a shape responding to a shape of the guide pin 112, and serves to house the guide pin 112 so as to firstly fix the main body 110. The insertion part 212 is preferably formed at a position corresponding to a position for use of the barrier net 120, that is, the initial mount position A.

The steel bracket 216 serves to support the guide pin 112 which is housed by the insertion part 212 at an upper side and a lower side.

The hooking part 214 is formed along a length direction of the guide part 210, and the hook 114 is hooked to the hooking part 214 at the initial mount position A. In order to release fixing of the main body 110, the hook lever 116 is operated to separate the hook 114 from the hooking part 214.

The fixing rail part 220 has a length corresponding to a length from the initial mount position A of the cargo screen 100 to the operation position B which can be easily used by a user. The operation position B can be varied according to a size of the luggage room 10, or the like. The operation lever part 230 is installed to an upper part of the fixing rail part 220.

As shown in FIG. 3 and FIG. 4, the operation lever part 230 includes a lever body 232 with a shape of a long rod, a lever 234 which is protruded at one end of the lever body 232 so as to be able to be pushed or pulled by a user, and a roller 236 which is rotatably connected to the other end of the lever body 232 and moves along the fixing rail part 220.

A plurality of gear teeth P which are engaged with the gear teeth formed to the fixing rail part 220 and the moving rail part 240 are formed on an outer circumference of the roller 236.

As shown in FIG. 4, the moving rail part 240 is disposed onto the operation lever part 230, and has a plurality of gear teeth P which are protruded toward an upper surface of the lever body 232. The gear teeth are formed to the moving rail part 240 to be adjacent to the roller 236, and a body receiving part 242 housing the main body 110 of the cargo screen 100 is formed.

An operating process of a combination type cargo screen movable front and rear according to an exemplary embodiment of the present invention will be briefly explained hereinafter.

If the lever 234 is pulled by a user, the roller 236 which is connected to the lever body 232 rotates toward the rear side of the vehicle 1 along the fixing rail part 220. The roller 236 rotates to pull the moving rail part 240 toward the rear side of the vehicle 1. Accordingly, the main body 110 of the cargo screen 100 which is housed by the moving rail part 240 moves toward the rear side of the vehicle.

At this time, the main body 110 is positioned at the operation position B. A user can use the cargo screen 100 without getting in the luggage room 10 or putting his hand on a floor at the operation position B, so that convenience is enhanced.

For convenience of a user, it is preferable that the moving distance of the main body 110 of the cargo screen 100 is set at twice of the moving distance of the lever 234. This can be regulated by varying the size and the distance of teeth P of the fixing rail part 220, the moving rail part 240, and the roller 236.

To the contrary, if a user pushes the lever 234, the roller 236 rotates toward the front side of the vehicle 1 along the fixing rail part 220. While the roller 236 rotates, the roller 236 moves the moving rail part 240 toward the front side of the vehicle 1. Accordingly, the main body 110 of the cargo screen 100 which is housed in the moving rail part 240 moves toward the front side of the vehicle.

At this time, the main body 110 is positioned at the initial mount position A. The cargo screen 100 can be used even at the initial mount position A, and at this position, the barrier net 120 is used. When the barrier net 120 is used, the main body 110 is firmly fixed to the guide part 210, so that regulations on luggage invasion prevention can be satisfied.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

As described above, in a combination type cargo screen movable front and rear according to an exemplary embodiment of the present invention, the main body supporting the cover screen can move in a forward and a rear ward direction of a vehicle, so that convenience of use is enhanced.

Furthermore, in case that the barrier bet is adopted, the main body of the cargo screen can be returned to its initial installation position, so that regulations on luggage invasion prevention can be satisfied.

## Claims

1. A combination type cargo screen (100) movable in a front and a rear direction comprising:
a main body (110) which is mounted to a luggage room (10) of a vehicle and can separably mount a barrier net (120) which prevents luggage from invading into a passenger room ;
a cover screen (130) which is rolled around the main body and can be drawn so as to cover luggage contained in the luggage room; **characterized in that**
a screen moving device (200) which moves the main body in a forward and a rear direction of the vehicle comprises:
guide parts (210) which are mounted to both sides of the luggage room along a drawing-out direction of the cover screen (130);
a fixing rail part (220) which is fixed along a length direction of the guide part (210) and is provided with a plurality of gear teeth ;
an operation lever part (230) which is movably mounted on an upper surface of the fixing rail part (220) and moves in a length direction of the fixing rail part (220) by a manipulation of a user ; and
a moving rail part (240) which is coupled to an upper part of the operation lever part (230) so as to house an end of the main body (110), moves along a length direction of the fixing rail part (220) by the operation lever part (230) and is provided with a plurality of gear teeth.

2. The combination type cargo screen of claim 1, wherein the operation lever part comprises:
a lever body (232) with a shape of a long rod;
a lever (234) which is protruded at one end of the lever body (232) so as to be able to be pushed or pulled by a user; and
a roller (236) which is rotatably connected to the other end of the lever body (232) and moved along the fixing rail part (220).

3. The combination type cargo screen of claim 2, wherein the roll (236) further comprises a plurality of gear teeth which are engaged with the gear teeth of the fixing rail part (220) and the moving rail part (240).

4. The combination type cargo screen of claim 1, wherein the gear teeth of the moving rail part (240) are formed toward an upper surface of the lever body (232) and the moving rail part (240) further comprises a body receiving part (242) which houses an end of the main body (110) at an end thereof which is adjacent to the roller.

5. The combination type cargo screen of claim 1, wherein the main body (110) further comprises a guide pin (112) which is protruded at both ends thereof, and the guide part (210) further comprises an insertion part (212) which is formed at an initial mount position where the cover screen (130) is not drawn out so as to house the guide pin.

6. The combination type cargo screen of claim 5, wherein the main body (110) further comprises a hook (114) which is installed to lower surfaces of both ends and a hook lever (116) which protrudes and returns the hook, and the guide part (210) further comprises a hooking part (214) which is formed to be adjacent to the insertion part (212) and to which the hook is maintained to be hooked.

7. The combination type cargo screen of claim 5, wherein a steel bracket (216) supporting an upper side and a lower side of the guide pin (112) at an insertion state of the guide pin is provided at an inside of the insertion part (212).

8. The combination type cargo screen of one of claim 1 to claim 7, wherein a moving distance of the main body (110) is set at twice of a moving distance of the lever (234).

## Patentansprüche

1. Kombinationsgepäckabdeckung (100), die vorwärts und rückwärts bewegbar ist, aufweisend:
einen Hauptkörper (110), der an einem Gepäckraum (10) eines Kraftfahrzeugs montiert ist, und an dem ein Absperrnetz (120) abnehmbar montierbar ist, welches das Eindringen eines Gepäcks in einen Fahrgastraum verhindert;
eine Abdeckung (130), die um den Hauptkörper gerollt und herausziehbar ist, so dass sie das Gepäck in dem Gepäckraum abdeckt,
**dadurch gekennzeichnet, dass**
eine Abdeckbewegervorrichtung (200), die den Hauptkörper vorwärts und rückwärts relativ zu dem Fahrzeug bewegt, aufweist:
Führungselemente (210), die entlang einer Ziehrichtung der Abdeckung (130) zu beiden Seiten des Gepäckraums montiert sind;
eine Fixierungsschiene (220), die entlang der Längsrichtung des Führungselements (210) fixiert ist und mit einer Mehrzahl von Zähnen versehen ist;
einen Betätigungshebel (230), der an einer oberen Fläche der Fixierungsschiene (220) bewegbar montiert ist und in der Längsrichtung der Fixierungsschiene (220) durch einen Anwender bewegbar ist; und
eine bewegbare Schiene (240), die mit einem oberen Teil des Betätigungshebels (230) zum Unterbringen eines Endes des Hauptkörpers (110) gekuppelt ist, entlang der Längsrichtung der Fixierungsschiene (220) durch den Betätigungshebel (230) bewegbar ist und mit einer Mehrzahl von Zähnen versehen ist.

2. Kombinationsgepäckabdeckung gemäß Anspruch 1, wobei der Betätigungshebel aufweist:
einen Hebelkörper (232) in Form eines langen Stabs;
einen Hebel (234), der von einem Ende des Hebelkörpers (232) absteht, so dass er durch einen Anwender schiebbar und ziehbar ist; und
eine Rolle (236), die mit dem anderen Ende des Hebelkörpers (232) drehbar verbunden ist und entlang der Fixierungsschiene (220) bewegbar ist.

3. Kombinationsgepäckabdeckung gemäß Anspruch 2, wobei die Rolle (236) ferner eine Mehrzahl von Zähnen aufweist, die mit den Zähnen der Fixierungsschiene (220) und der bewegbaren Schiene (240) in Eingriff stehen.

4. Kombinationsgepäckabdeckung gemäß Anspruch 1, wobei die Zähne der bewegbaren Schiene (240) einer oberen Fläche des Hebelkörpers (232) zugewandt sind und die bewegbare Schiene (240) ferner ein Körperempfängerelement (242) aufweist, von dem an seinem der Rolle benachbarten Ende ein Ende des Hauptkörpers (110) untergebracht wird.

5. Kombinationsgepäckabdeckung gemäß Anspruch 1, wobei der Hauptkörper (110) ferner einen Führungsstift (112) aufweist, der von seinen beiden Enden absteht, und das Führungselement (210) ferner ein Einführelement (212) aufweist, das in einer anfänglichen Montageposition ausgebildet ist, wo die Abdeckung (130) nicht herausgezogen ist, so dass der Führungsstift darin untergebracht ist.

6. Kombinationsgepäckabdeckung gemäß Anspruch 5, wobei der Hauptkörper (110) ferner einen Haken (114), der an unteren Flächen von beiden Enden montiert ist, und einen Hakenhebel (116) aufweist, der absteht und den Haken zurückstellt, und das Führungselement (210) ferner ein Einhakelement (214) aufweist, das dem Einführelement (212) benachbart ausgebildet ist und an dem der Haken eingehakt gehalten ist.

7. Kombinationsgepäckabdeckung gemäß Anspruch 5, wobei eine Stahlhalterung (216), die eine obere Seite und eine untere Seite des Führungsstifts (112) in einem Einführzustand des Führungsstifts abstützt, an einer Innenseite des Einführelements (212) vorgesehen ist.

8. Kombinationsgepäckabdeckung gemäß einem der Ansprüche 1 bis 7, wobei ein Bewegungsabstand des Hauptkörpers (110) als zweimal eines Bewegungsabstands des Hebels (234) gesetzt ist.

## Revendications

1. Cache-bagages de type combiné (100) pouvant être déplacé vers l'avant et vers l'arrière comprenant :
un corps principal (110) qui est monté dans le coffre à bagages (10) d'un véhicule et peut supporter séparément un filet barrière (120) qui empêche les bagages de passer dans l'espace réservé aux passagers ;
une capote (130) qui est enroulée autour du corps principal et peut être tirée pour couvrir les bagages contenus dans le coffre ;
**caractérisé en ce que**
un dispositif (200) de déplacement de la capote qui déplace le corps principal vers l'avant et vers l'arrière du véhicule et comprend :
des parties de guidage (210) qui sont montées des deux côtés du coffre le long d'une direction de déploiement de la capote (130) ;
une partie de rails de fixation (220) qui est fixée dans le sens de la longueur de la partie de guidage (210) et est munie d'une pluralité de dents d'engrenage ;
une partie de levier d'actionnement (230) qui est montée de manière mobile sur une surface supérieure de la partie de rails de fixation (220) et se déplace dans le sens de la longueur de la partie de rails de fixation (220) par une manipulation d'un utilisateur ; et
une partie de rails mobile (240) qui est couplée à une partie supérieure de la partie de levier d'actionnement (230) afin de loger une extrémité du corps principal (110), est déplacée dans le sens de la longueur de la partie de rails de fixation (220) par la partie de levier d'actionnement (230) et est munie d'une pluralité de dents d'engrenage.

2. Cache-bagages de type combiné selon la revendication 1, dans lequel la partie de levier d'actionnement comprend :
un corps de levier (232) avec la forme d'une longue tige ;
un levier (234) qui fait saillie à une extrémité du corps de levier (232) pour pouvoir être poussé ou tiré par un utilisateur ; et
un galet (236) qui est raccordé à rotation à l'autre extrémité du corps de levier (232) et est déplacé le long de la partie de rails de fixation (220).

3. Cache-bagages de type combiné selon la revendication 2, dans lequel le galet (236) comprend en outre une pluralité de dents d'engrenage qui sont engagées sur les dents d'engrenage de la partie de rails de fixation (220) et la partie de rails mobile (240).

4. Cache-bagages de type combiné selon la revendication 1, dans lequel les dents d'engrenage de la partie de rails mobile (240) sont formées vers une surface supérieure du corps de levier (232) et la partie de rails mobile (240) comprend en outre une partie (242) recevant le corps, qui loge une extrémité du corps principal (110) à une de ses extrémités qui est adjacente au galet.

5. Cache-bagages de type combiné selon la revendication 1, dans lequel le corps principal (110) comprend en outre une broche de guidage (112) qui fait saillie à ses deux extrémités et la partie de guidage (210) comprend en outre une partie d'insertion (212) qui est formée en position de montage initiale où le cache-bagage (130) n'est pas déployé pour loger la broche de guidage.

6. Cache-bagages de type combiné selon la revendication 5, dans lequel le corps principal (110) comprend en outre un crochet (114) qui est installé sur les surfaces inférieures des deux extrémités et un levier de crochet (116) qui fait saillie et ramène le crochet, et la partie de guidage (210) comprend en outre une partie d'accrochage (214) qui est formée de manière à être adjacente à la partie d'insertion (212) et à laquelle est maintenu le crochet à accrocher.

7. Cache-bagages de type combiné selon la revendication 5, dans lequel une potence en acier (216) supportant un côté supérieur et un côté inférieur de la broche de guidage (112) en état d'insertion de la broche de guidage est aménagée à l'intérieur de la partie d'insertion (212).

8. Cache-bagages de type combiné selon l'une quelconque des revendications 1 à 7, dans lequel une distance de déplacement du corps principal (110) est réglée à deux fois une distance de déplacement du levier (234).
